# EUROPEAN PATENT APPLICATION

(11) **EP 0 573 658 A1**
(43) Date of publication of application: **15.12.1993**
(21) Application number: 92924012.5
(22) Date of filing: 26.11.1992
(51) Int. Cl.: H02P 7/00, H02K 11/00

(54) **METHOD OF DEMAGNETIZATION PREVENTION AND CONTROL FOR ELECTRIC MOTOR**

(30) Priority: 27.12.1991 JP 347114/91
(71) Applicant: FANUC LTD., Minamitsuru-gun, Yamanashi 401-05 (JP)
(72) Inventor: NIHEI, Ryo, Fujiyoshida-shi, Yamanashi 403 (JP); HAMURA, Masayuki, Fanuc Mansion Harimomi 8-103, Minamitsuru-gun, Yamanashi 401-05 (JP); SAKAI, Tamotsu, Tsuru-shi, Yamanashi 402 (JP)
(74) Representative: Otte, Peter, Dipl.-Ing.
(86) International application number: JP9201542
(87) International publication number: WO9313589

(57) **Abstract**

The present invention aims at providing a motor operation method capable of preventing demagnetization of an electric motor due to over-cooling in an ultra-low-temperature environment, and an electric motor capable of withstanding the use in such an environment. Thus the present invention provides a method of demagnetization prevention and control for an electric motor, in which the temperature of the electric motor or the ambient temperature of the motor is detected by temperature sensor means, and if it is lower than the critical demagnetization temperature, the motor is stopped and kept at rest at least until the critical temperature is exceeded. In an alternative demagnetization prevention and control method, motor heating means and a temperature switch are used, and if the temperature of the motor is lower than the critical demagnetization temperature, the heating means is energized to raise the temperature of the motor itself.

## Description

### Technical Field

This invention relates generally to a method of controlling an electric motor. More particularly the invention relates to a method of preventing the magnets in an electric motor used very low temperature below minus several dozens degree celsius (such as in the polar regions, in a low temperature test installation, or in a refrigerated warehouse) from being demagnetized, thereby preventing from a reduction in the performance of the electric motor. The method also allows the electric motor to use inexpensive magnetic materials, whereby the cost for producing an electric motor for use in low temperatures is kept a reasonable level.

### Background Art

The magnetic force produced by permanent magnets in an electric motor, particularly in a servo motor for driving and controlling the movement of a movable body, decreases when an excess drive current, above a critical current, is supplied to the motor. This phenomena is known as demagnetization. The critical current varies depending on the temperature in which the motor is used, and is considerably reduced when the temperature of the permanent magnets is lower than a critical temperature (this condition is referred as supercooled condition). When the electric motor is used in the supercooled condition, the performance of the motor may be permanently impaired. Demagnetization will not take place at temperatures around -10°C for general electric motors. However the temperatures blow about -30 °C the usual driving current supplied to the electric motor exceeds the critical current and this can permanently impairs the performance of the motor.

To avoid the demagnetization at very low temperatures, materials having low critical temperature are used for permanent magnets. Such materials, however, are expensive. Furthermore, the demand for electric motors for very low temperatures are very low, since such a motor is for special use and this increases the cost to produce the motor.

### Disclosure of the Invention

Thus, the main object of the present invention is to provide a motor driving method which is able to prevent an electric motor used in very low temperatures from demagnetization due to supercooling, thereby providing the inexpensive electric motor operable in very low temperatures.

Another object of the invention is to provide an novel and suitable controlling method for an electric motor, used in very low temperatures, to ensure the operation of a driven body used in very low temperatures, for example, an industrial robot or the other industrial equipment, using an electric motor as a drive source.

To achieve the object, according to the invention, there is provided a method of preventing an electric motor, used in very low temperatures, from being demagnetized, in which the electric motor is stopped when the temperature of the electric motor is equal to or lower than the critical temperature by setting torque command sent to the electric motor to 0 or by activating a breaker on a current supply line so as to shut off the supply of driving current to the electric motor.

Thus, there is provided a method of preventing an electric motor used in very low temperature from being demagnetized, in which the method comprises the following steps; detecting the temperature of the electric motor or the temperature around the electric motor by meanes of a temperature sensor; activating a means for stopping the electric motor if the detected temperature is equal to or lower than a predetermined critical temperature; and stopping the electric motor during at least the detected temperature is equal to or lower than the predetermined critical temperature.

Furthermore, there is provided an method of operating an electric motor used in very low temperature circumstances, which uses a heating means for the electric motor and a temperature switch, characterized in that the method comprises a step of activating the means for heating the electric motor so as to heat and to raise the temperature of the electric motor when the temperature of the electric motor is equal to or lower than a critical temperature for demagnetization.

### Brief Description of the Drawings

Figure 1 is a schematic representation of a servo-motor and arrangements around thereof for driving a wrist of industrial robot, which motor is controlled by the method of the invention.

Figure 2 is a schematic representation of a servo motor and arrangements around thereof for driving a wrist of industrial robot, which motor is controlled by the method of the invention.

Figure 3 is a schematic representation of a servo motor and arrangements around thereof for driving a wrist of industrial robot, which motor is controlled by the method of the invention.

Figure 4 is a block diagram of a controlling system for a servo motor driving a wrist of industrial robot, which motor is controlled by the method of the invention.

Figure 5 presents a flow chart of a main routine for controlling a servo-motor driving a wrist of a robot with application of a first method of invention.

Figure 6 presents a flow chart of a sub-routine for controlling a servo-motor driving a wrist of a robot with application of a first method of invention.

Figure 7 presents a flow chart of a main routine for controlling a servo-motor driving a wrist of a robot with application of a second method of invention.

Figure 8 presents a flow chart of a sub-routine for controlling a servo-motor driving a wrist of a robot with application of a second method of invention.

### Best Mode for Carrying Out the Invention

In the following, a detailed description is made of a method of preventing an electric motor from being demagnetized by being supercooled during operation according to the invention, based on the preferred embodiments. In the embodiments, the method of the invention is applied to a servo-motor for driving a wrist of an industrial robot as an example.

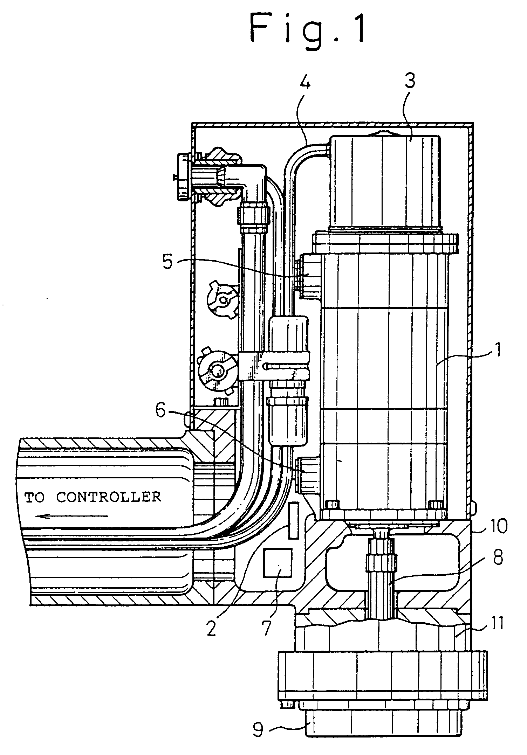

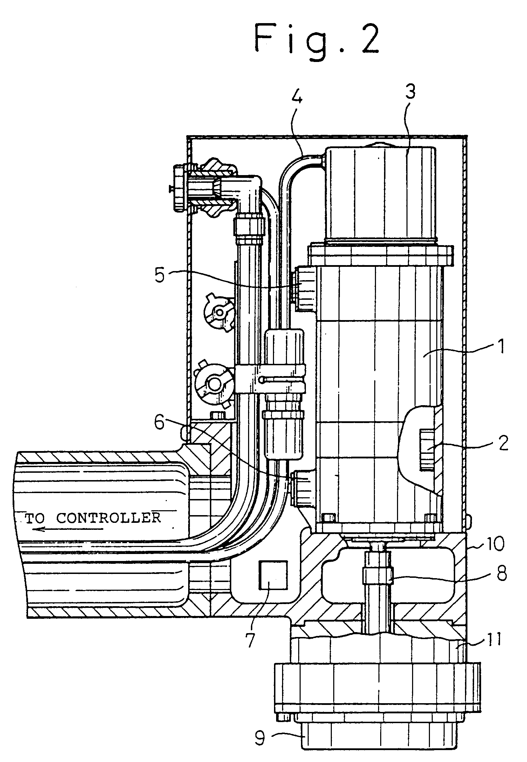

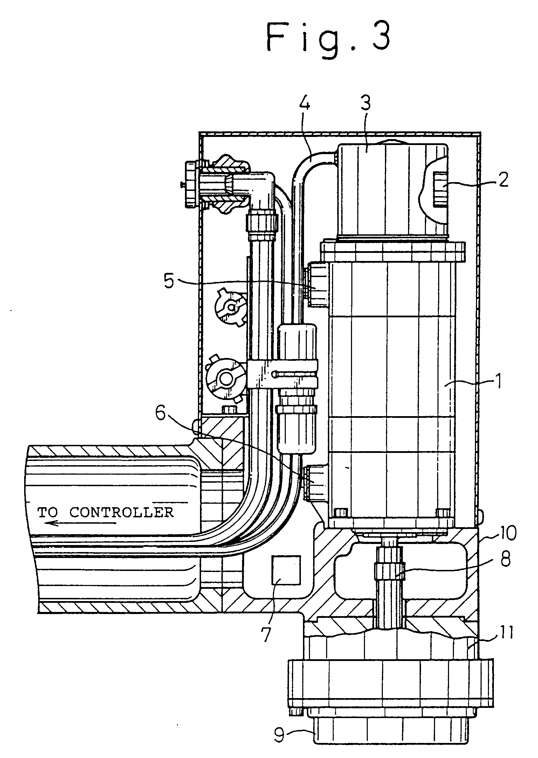

Referring to Figures 1 to 3, there is shown a servo-motor 1 mounted on a wrist casing 10 of an industrial robot. The rotation of the servo-motor 1 drives the wrist flange 9 through a gear 8 and a reduction gear box 11 on which the wrist flange 9 is mounted. The servo-motor 1 comprises a pulse-corder 3 for detecting the rotational position and speed, a signal cable 4 for carrying a signal from the pulse-corder 3, a power cable 5 for supplying driving current to the servo-motor 1, a cable 6 for controlling the breaking action, and a gear 8 as in conventional servo-motors. Furthermore, in order to allow the servo-motor to be operative in the very low temperatures, the servo-motor 1 comprises a heater 7 for preventing the servo-motor 1 from being demagnetized by heating the servo-motor 1 to the above supercooled condition, and a thermostat or a temperature sensor 2 for measuring and detecting the temperature of the servo-motor 1 or the temperature around the position at which the servo-motor 1 is mounted. The thermostat or the temperature sensor 2 may be arranged at a position close to the servo-motor 1 (referring to Figure 1), on the servo-motor 1 (referring to Figure 2) or in the pulse-corder 3 (referring to Figure 3). It is noted that a current breaker (not shown) is provided on the driving current supplying line of the power cable 5.

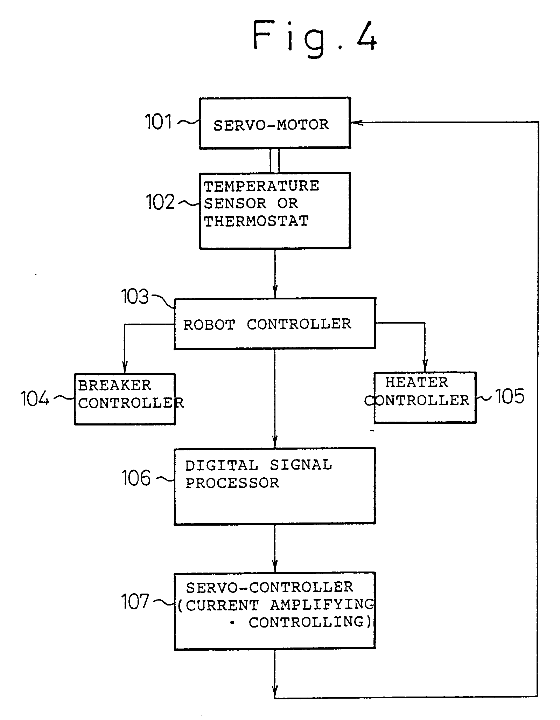

In the following, the description refers Figure 4, a block diagram of the controlling system for realizing the method of preventing the servo-motor from being demagnetized by being supercooled, based on a servo-motor for driving the wrist of the robot as described above.

The temperature sensor or the thermostat 102 measures and detects the temperature of the servo-motor 1 or the temperature of a position close to the servo-motor 1, and sends the measured temperature Tm to the robot controller 103.

The robot controller 103 is connected to a controller 105 of the heater 7 for preventing from demagnetization due to the supercooling, and to a controller 104 for the circuit breaker for disconnecting the servo-motor 101 from the power supply. Thus, based on the measured temperature Tm measured and detected by the temperature sensor or the thermostat 102, the robot controller 103 is operable to activate the heater 7 through the heater controller 105 so as to heat the servo-motor 101, and to disconnect or control the circuit breaker through the circuit breaker controller 104 so as to control the power supplied to the servo-motor 101.

A driving command directing the movement of the robot is generated by the robot controller 103 based on requirements according to a program for the robot. The driving command is digitized by a digital signal processor 106 and is sent to a servo-controller 107 for the servo-motor. A torque command according to the driving requirements of the robot is sent from the servo-controller 107 to the servo-motor 101.

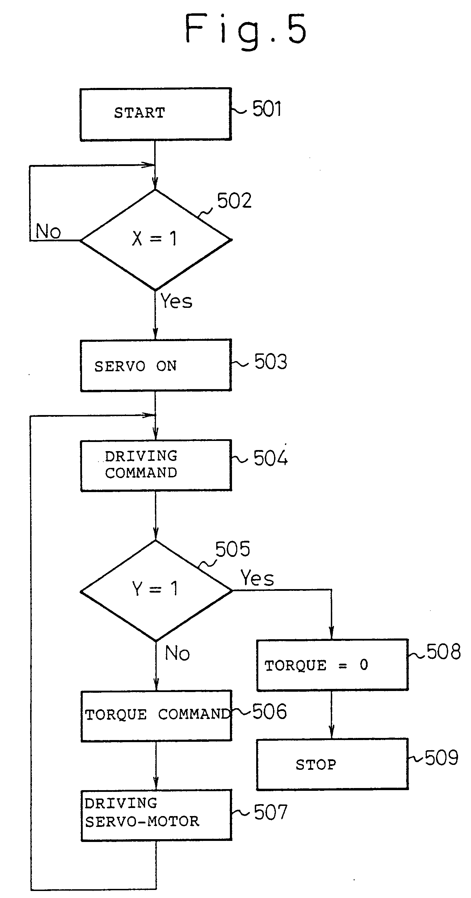

In the following, the detailed description is made of the controlling method, for preventing the servo-motor from being demagnetized by supercooling, with referring a block diagram illustrated in Figure 4 and flow charts illustrated in Figures 5 to 8.

Firstly, a description is made of the main routine for controlling the servo-motor with reference to Figures 4 and 5.

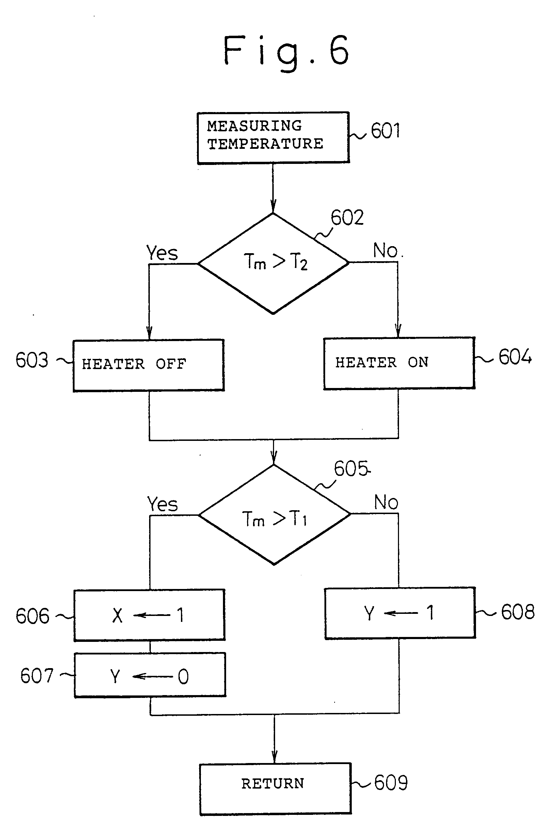

When the robot controlling system is started (step 501), a temperature measuring sub-routine (shown in Figure 6), which is described below, is also started. In the sub-routine, the value 1 is stored in a register X when the temperature Tm, measured by the temperature sensor 102 (referring to Figure 4), is equal to or lower than a first reference temperature T1 which may be predetermined to the same temperature as the critical temperature of the servo-motor or to a temperature higher than the critical temperature by several degrees celsius.

In step 502, it is determined whether X = 1 or not.

If X≠ 1, that is, if the measured temperature Tm is equal to or lower than the first reference temperature T1 (No in step 502 and in this case 0 is stored previously), then the servo-controller 107 is not started. In this case, the heater 7 is activated by the heater controller 105, and the system waits until the temperature of the servo-motor is raised higher than the first reference temperature T1. Thus, the servo-motor driving the robot is prevented from being demagnetized by being supercooled at start-up.

If X= 1 (Yes in step 502), then the servo-controller 107 is started (stop 503), and the robot system is started as usual (step 503). In other word, if the measured temperature Tm is higher than the first reference temperature T1, then the servo-controller 107 starts the operation, and the driving command according to the driving requirements for the wrist of the robot is sent to the servo-controller 107 from the robot controller 103 (step 504).

Also, after the servo-controller 107 is started, the temperature measuring sub-routine continues the operation, that is, the temperature sensor or the thermostat 102 continues measuring the temperature of the servo-motor 101 or the temperature around the servo-motor 101 constantly. In step 505 of the main routine, the robot system monitors whether the measured temperature Tm is equal to or lower than the first reference temperature T1. That is, before sending the torque command to the servo-motor 101 from the servo-controller 107, it is determining whether the measured temperature Tm is higher than the first reference temperature T1 by examining the contents of register Y (step 505) as described below. Then, if the measured temperature Tm is higher than the first reference temperature T1 (No in step 505), the desired torque command is sent to the servo-motor 101 from the servo-controller 107. The servo-motor 101 is driven according to the torque command (step 507). On the other hand, if the measured temperature Tm is equal to or lower than the the first reference temperature T1, then in the temperature measuring sub-routine, the value 1 is stored in a register Y (Yes in step 505), and the torque command from the servo-controller 107 is set to 0 (step 508). The servo-motor 101 is stopped when the torque command is 0 (step 509), whereby the servo-motor is prevented from being demagnetized after the start-up.

Now referring to Figures 4 and 6, a description is made of the temperature measuring subroutine.

The temperature measuring sub-routine constantly measures the temperature of the servo-motor 101 or the temperature around the servo-motor 101 separately from the main routine controlling the servo-motor 101.

Firstly, at the start-up of the robot controlling system, the temperature sensor or the thermostat 102 measures the temperature of the servo-motor or the temperature around the servo-motor. If the measured temperature Tm is equal to or lower than a second reference temperature T2 (No in step 602) which is predetermined higher than the first reference temperature T1 by several degrees celsius, then a heater activating command is sent from the robot controller 103 to the heater controller 105 so that the heater 7 (referring to Figure 1 or 2) is activated, whereby the the servo-motor 101 is heated. On the other hand, if the measured temperature Tm is higher than the second reference temperature T2 (Yes in step 802), the heater 7 is deactivated. Thus, even if in the supercooled condition, the servo-motor 101 is appropriately heated so that the servo-motor can be operated without being demagnetized.

In step 605, the measured temperature Tm is compared with the first reference temperature T1.

If the measured temperature Tm is higher than the first reference temperature T1, then in step 606, the value 1 is stored in the register X, and in step 607, 0 is stored in the register Y. In this case, in step 503, the servo-controller 107 is started as previously described.

If the measured temperature Tm is equal to or lower than the first temperature T1 (No in the step 605), then, in step 609, the value 1 is stored in the register Y. The flag in the register Y, that is, Y= 1, that is detected in the step 505 of the main routine indicates that the measured temperature Tm is equal to or lower than the first reference temperature T1 (Yes in the step 505), and the servo-motor is disactivated (steps 508 and 509).

The sub-routine runs sequentially from the step 601 to the step 609 at the start-up of the system. Thus, if the measured temperature Tm is equal to or lower than the first reference temperature T1, then, in the step 609, the value 1 is stored in the register Y even at start-up. If the flag of the register Y were 1 when the measured temperature Tm had become higher than the first temperature T1 due to heating of the servo-motor by the heater after start-up, then the determination in the step 505 would be to stop the operation of the servo-motor. Therefore, in step 607, 0 is stored in the register Y so as to allow the servo-motor to be activated.

The method of preventing the servo-motor from being demagnetized mentioned above is carried out by making the value of the torque command to the servo-motor 101 be 0 in the servo-controller 107 when the measured temperature Tm of the servo-motor 1 or around the servo-motor 1 is equal to or lower than the first temperature T1 which is predetermined in consideration of the critical temperature of the servo-motor 101. The method of preventing the servo-motor from being demagnetized, however, is not limited to such a manner. It is also possible to prevent the servo-motor from being magnetized if the the current to the servo-motor is not presented when its temperature is equal to or lower than the critical temperature as previously described.

In the following, a description is made of a variant embodiment for preventing the servo-motor from being demagnetized, according to the invention. The second embodiment prevents the servo-motor from being demagnetized by way of stopping the servo-motor current by the operation of the current breaker controller 104 in the robot controller 103.

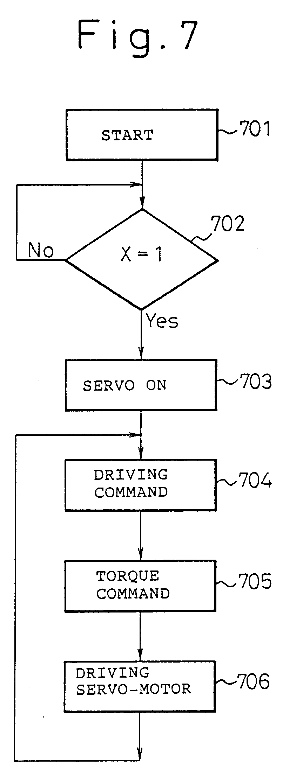

Now referring to the Figures 4 and 7, a description is made of the main routine of the servo-motor controlling system.

Also in the second embodiment, a temperature measuring sub-routine starts when the robot system start as the first embodiment.

In the sub-routine, if the measured temperature Tm is equal to or lower than the first reference temperature T1, then the servo-controller 107 does not start the operation (No in step 702) since 1 is not stored in the register X (in this case 0 is stored in register X in advance). In this case, the heater controller 105 sends a command activating the heater to heat the servo-motor 1, and at the same time time, the system waits until the measured temperature Tm become higher than the first reference temperature T1, whereby the servo-motor 101 is prevented from being demagnetized at the start-up.

If the measured temperature Tm is higher than the first reference temperature T1, then the value 1 is stored in the register X in the sub-routine. In step 702, it is determined that the measured temperature Tm is higher than the first reference temperature T1 by the flag of the register X, that is, X = 1 (Yes in the step 702), and in step 703, the servo-controller 107 is started as usual.

The robot controller 103 sends a driving command according to driving requirements for the wrist of the robot to the servo-controller 107 when the servo-controller 107 is started (step 703), and the robot controlling system is started. Then the servo-controller 107 sends a torque command to the servo-motor 101 (step 705), according to which the servo-motor 101 is driven (step 706).

In the second embodiment, the method of preventing the servo-motor from being demagnetized, after the start-up of the servo-motor 107, is carried out in the temperature measuring sub-routine.

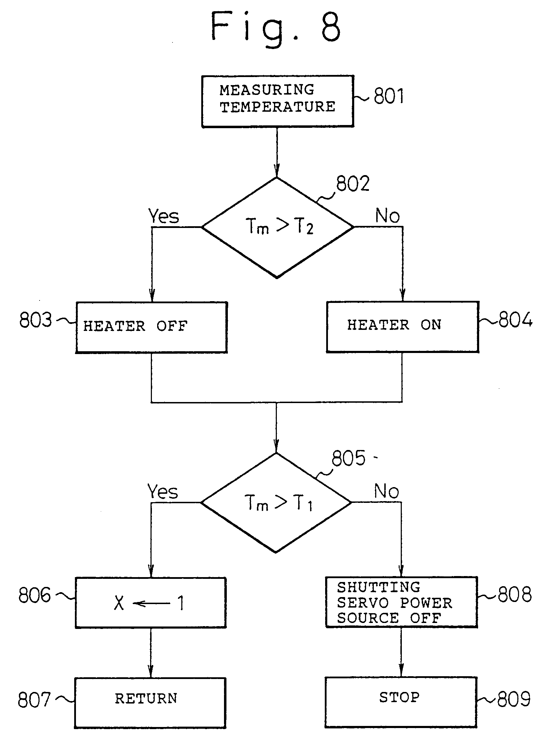

In the temperature measuring sub-routine illustrated in Figure 8, if the measured temperature Tm is equal to or lower than the second reference temperature T2 (No in step 802), then a heater activating command is generated by the robot controller 103 through the heater controller 105, whereby the heater heats the servo-motor 1 (step 804). The system then waits until the measured temperature Tm raises higher than the second reference temperature T2 (step 702). Thus, the servo-motor 101 is prevented from being demagnetized.

If the measured temperature Tm is higher than the second reference temperature T2 (Yes in step 802), then the heater deactivated (step 803).

Then, in step 805, the measured temperature Tm is compared with the first reference temperature T1. If Tm is higher than T1 (Yes in the step 805), then the value 1 is stored in the register X (step 806). In this case, the servo-controller 107 is started according to the main routine illustrated in Figure 7 (step 703).

If the measured temperature Tm is equal to or lower than the first reference temperature T1, then the current breaker is shut by the robot controller 103 through the breaker controller 104. In such a manner, the supply of the driving current is stopped and the servo-motor 101 is deactivated.

### INDUSTRIAL Applicability

The present invention is applicable to a electric motor which is used in the special circumstances of very low temperatures (below minus several dozens degree celsius, for example, in the polar regions, in a low temperature test installation, or in a refrigerated warehouse). By the application of the method of preventing the electric motor from being demagnetized, according to the invention, even a conventional electric motor, other than the special motor for the very low temperature circumstances comprising permanent magnets formed of expensive magnetic materials having low critical temperatures, is prevented from being demagnetized and is operable in such circumstances by a heater heating the electric motor or the vicinity of the motor under control of a temperature sensor or a thermostat measuring and detecting the temperature of the electric motor or the temperature around the electric motor. Furthermore, it is possible to increase the reliability of the movement of the industrial robots or of the variety of the industrial equipment used in very low temperature.

### DESCRIPTION OF THE REFERENCE NUMBERRS

- 1,101: servo-motor
- 2,102: temperature sensor or thermostat
- 7: heater
- 103: robot controller
- 104: breaker controller
- 105: heater controller
- 106: digital signal processor
- 107: servo-controller

## Claims

1. A method of preventing an electric motor from being demagnetized when the motor is used in very low temperatures, said method comprising the following steps:
detecting the temperature of said electric motor or temperature around said electric motor by means of a temperature sensor;
activating a means for stopping said electric motor if said detected temperature is equal to or lower than a predetermined reference temperature, said reference temperature is predetermined in consideration of a critical temperature of demagnetization, above the critical temperature demagnetization phenomenon being not realised; and
stopping said electric motor during at least the time that said detected temperature is equal to or lower than said predetermined reference temperature.

2. The method according to claim 1 in which said electric motor is stopped by setting a torque command value to 0 when the temperature of said electric motor is equal to or lower than said reference temperature, which command is sent to said electric motor.

3. The method according to claim 1 in which said electric motor is stopped by activating a breaker on a current supply line so as to stop a supply of driving current to said electric motor when the temperature of said electric motor is equal to or lower than said reference temperature.

4. An operation of controlling an electric motor having a heating means for said electric motor and a temperature switch, which motor is used in very low temperatures, characterized in that said operation comprising the following step;
activating a means for heating said electric motor so as to heat and to raise the temperature of said electric motor when the temperature of said electric motor is equal to or lower than a reference temperature for demagnetization, which reference temperature is predetermined in consideration of the critical temperature of demagnetization.
